# EUROPEAN PATENT APPLICATION

(11) **EP 4 096 163 A1**
(43) Date of publication of application: **30.11.2022**
(21) Application number: 21176247.1
(22) Date of filing: 27.05.2021
(51) Int. Cl.: H04L 12/24, H04L 12/26, H04W 24/02, H04L 12/725, H04L 12/721

(54) **COMPUTER IMPLEMENTED METHOD FOR IMPROVING THE LATENCY OF A COMMUNICATION WITHIN A 5G NETWORK**

(71) Applicant: Siemens Sanayi ve Ticaret A. S., 34870 Istanbul (TR)
(72) Inventor: Akgunduz, Mustafa Haluk, 34870 Istanbul (TR); Ulusoy, Kazim, 34870 Kartal/Istanbul (TR)
(74) Representative: Maier, Daniel Oliver

(57) **Abstract**

Computer implemented method for improving the latency of a communication within a 5G network with a core-network (CN), a multi-access-edge-computing block (MEC) and a radio-access-network (RAN), comprising following steps:
a) determining and storing analytics data (KPI-AD, AD-CN, AD-E, AD-RAN) related to the latency of at least one previous successful communication,
b) determining and storing failure data (FL, FD-CN, FD-E, FD-RAN) related to the latency of the at least one previous failed communication,
c) calculating at least one rule (R-CN, R-E, R-RAN) derived from said stored analytics data (KPI-AD, AD-CN, AD-E, AD-RAN) and said stored failure data (FL, FD-CN, FD-E, FD-RAN), which at least one rule (R-CN, R-E, R-RAN) defines a transmission path through 5G network for a successful communication according to said at least one predefined latency criterion (KPI-AD, KPI-CN, KPI-E, KPI-RAN, CTH, TCT, AT, FL),
d) providing said at least one rule (R-CN, R-E, R-RAN) to the core network (CN), the multi-access edge computing block (MEC) and/or the radio access network (RAN) respectively affected by the rule, and
e) applying said at least one rule (R-CN, R-E, R-RAN), when establishing a transmission of a new communication through the 5G network.

## Description

The invention relates to a computer implemented method for improving the latency of a communication within a 5G network with a core-network, a multi-access-edge-computing block and a radio-access-network.

The invention relates to a device, a computer program, an electronically readable data carrier and a data carrier signal.

In 5G managed closed-loop networks like in industrial environment latency related problems between industrial devices can occur when communicating with each other. For instance, Industrial Programmable Logic Controllers (PLC) with deterministic run behavior can result in stop state in case of a high latency. In such cases a further manual investigation can be necessary for detecting, understanding and resolving such a problem.

In 5G networks, there are multiple contexts, that are responsible for managing the several components in the network. These components are:
- 5G Core Network: is responsible for orchestrating the 5G network functions,
- Multi-access Edge Computing Block: is responsible for edge computing of specific functions, which are close to an user equipment,
- Radio-Access-Network: is responsible for coordinating network resources across wireless devices.

Basically, there is a need for failure detection and analyzing mechanisms in the system to determine actions to recover and/or optimize the 5G network inner components even in 5G core-network, a multi-access-edge-computing block and a radio-access-network from a single key performance indicator metric, such as latency or bandwidth.

In prior art, namely in the publication WO2020092541 A2, the problem is addressed in general manner with collecting corresponding performance data, analyzing this data and predicting the demand for network slice instance resources for given time and location. Subsequently, adjustments like new allocations are performed.

The publication WO2020033424 A1 offers one other more specific solution, which is based on a specific key performance indicator received from a customer. The system collects corresponding KPI data for providing a management data analytics service to predict traffic volume or resource utilization.

Further research topics based on deterministic communication between devices, how to detect and resolve the failures are investigated already, like "5G-Enabled Fault Detection and Diagnostics", P Hu, J Zhang, IEEE Internet of Things Journal, 2020, volume 7, issue 4, page 3267 - 3281.

However, in prior art, there is no latency-oriented failure-based network optimization and resource allocation in 5G System known.

It is the objective of the invention to provide a network optimization and resource allocation of industrial networks in 5G to enhance latency related performance, which includes aspects like availability and determinism in industrial domain.

The problem is solved by a computer implemented method for improving the latency of a communication within a 5G network with a core-network, a multi-access-edge-computing block, and a radio-access-network, comprising following steps:
a) determining and storing analytics data of the 5G network related to the latency of at least one previous communication within the 5G network, wherein the transmission of said at least one previous communication was performed successfully,
b) determining and storing failure data of the 5G network related to the latency of the at least one previous communication within the 5G network, wherein the transmission of said at least one previous communication has failed at least one predefined latency criterion,
c) calculating at least one rule derived from said stored analytics data and said stored failure data, which at least one rule defines a transmission path through 5G network for a successful communication according to said at least one predefined latency criterion,
d) providing said at least one rule to the core network, the multi-access edge computing block and/or the radio access network respectively affected by the rule, and
e) applying said at least one rule, when establishing a transmission of a new communication through the 5G network.

The invention proposes a latency driven optimization and/or resource allocations using failure information collected from the 5G system components i.e. subsystems.

Latency has a crucial value in Ultra Reliable Low Latency Communication (URLLC) context because it is most important key performance indicator in deterministic and real-time networks.

According to the invention a failure inspection feature, a recovery feature and a recommendation system related to system latency are provided, in which deterministic communication failures between the industrial 5G core network with its 5G devices, radio-access-network and multi-access edge computing in a closed-loop 5G network, i.e. a 5G system, are considered.

New components are added to the core network, the edge network and the radio-access-network to realize a failure monitoring, a failure detection and a latency analyzing functionality to achieve related resource allocation and network optimization on target contexts, i.e. respective 5G subsystems, which are responsible for inspecting the failures based on an assigned latency on a specific context or subsystem like core network, the edge network and the radio-access-network.

Basically, such a failure inspection engine uses the occurred failures to create failure analyze data, together with input data from a network data analytics function.

Network data from communication tasks within the 5G network are captured and analyzed regarding at least one predefined key performance indicator type.

In particular, the network data analytics function is applied to the central network, the core network, the edge network and the radio-access-network.

First, a latency based filtered failure list is captured from a monitoring engine acting as a network orchestrator.

Then, the list is filtered by target context, make reordering on the list by a priority such as software or hardware.

Subsequently, the list is iteratively mapped one by one for each failure with corresponding analytics data provided from network data analytics function.

An inspection process is performed with this data together with predefined context thresholds and the previous results stored in a queue.

If inspection data can create a meaningful result from current amount of input, it forwards the result to a recommendation process otherwise this processed result is added to the queue to be used by upcoming iterations.

It also gets the target context, i.e. core network, the edge network and the radio-access-network and a final action type from an user interface.

Target context is used to filter the failure list just for the selected context.

An action type is used for the final forwarding of the output result, if recommendation is selected by the operator, then recommendation output is return to the user interface, otherwise necessary action to be taken is fed to a rule engine.

Further, a rule engine is part of the 5G system, which is responsible for taking the action from failure inspection engine and creating a relevant rule for that action. First, action processor groups the actions like HW, SW, NSI or NSSI etc. based actions. Then it provides this group information to rule creator, to make the final arrangements on the actions. Finally, if a rule is created by the rule creator, it sends the created rules to rule appliers and inform the UI about the taken actions, otherwise it only informs the UI about the failure of the rule creation.

Further, a user interface is part of the 5G system, which is responsible for:
- driving the failure inspection engine, with sending the target context type, such as 5G core-network, a multi-access-edge-computing block and a radio-access-network and the action type (recommendation or action), receiving the recommendation about the failure inspection
- driving the KPI-manager with sending the KPI type (latency) and the context-based threshold values.
- getting information from the rule engine about the created rules.

By the invention, a transmission path with a predefined latency is provided by the 5G system.

In a further development of the invention, it is foreseen that the 5G network further comprises a network data analytics function for executing step a) including:
- a core-network network data analytics function configured to determine analytics data regarding latency data from the core network,
- an edge network data analytics function configured to determine analytics data regarding latency data from the edge,
- a radio-access-network network data analytics function configured to determine analytics data regarding latency data from the radio-access-network, and
- a central network data analytics function configured to generate key performance indicator analytics data including the analytics data from the core-network network data analytics function, the analytics data from the edge network data analytics function and the analytics data from the radio-access-network network data analytics function.

Hence, the network data analytics function can generate key performance indicator analytics data very precisely and individually for connected subsystems in an efficient way.

The respective network data analytics function can be implemented by a respective calculation device or engine with a memory.

In general, an engine or a service is a special version of a function, in which the engine or service stays in the loop unless some stop condition is occurred.

Generally, a function is responsible for a single task with a "one shot execution".

In a further development of the invention, it is foreseen that the 5G network further comprises a monitoring orchestrator for executing step b) including:
- a core-network monitoring engine configured to determine failure data regarding latency data from the core network,
- an edge monitoring engine configured to determine failure data regarding latency data from the edge, and
- a radio-access-network monitoring engine configured to determine failure data regarding latency data from the radio-access-network, and
- a central monitoring engine configured to generate a failure list from said failure data from the core network, said failure data from the edge and said failure data from the radio-access-network.

Hence, the monitoring orchestrator can generate key performance indicator failure data very precisely and individually of connected subsystems in an efficient way.

The monitoring orchestrator and/or the respective monitoring engine can be implemented by a respective calculation device or engine with a memory.

In a further development of the invention, it is foreseen that the 5G network further comprises a rule applier network function for executing step d) including:
- a core-network rule applier network function configured to apply a network rule to the core network,
- an edge rule applier network function configured to apply an edge rule to the edge,
- a radio-access-network rule applier network function configured to apply a radio-access-network rule to the radio-access-network, and
- a central rule applier network function configured to apply the core-network rule to the core-network rule applier network function, the edge rule to the edge rule applier network function and the radio-access-network rule to the radio-access-network rule applier network function.

Hence, the rule applier network function can generate one or more rules very precisely and individually for connected subsystems in an efficient way.

The respective rule applier network function can be implemented by a respective calculation device or engine with a memory.

In a further development of the invention, it is foreseen that the 5G network further comprises a failure inspection engine for executing step c), which is configured to consider the key performance indicator analytics data received from the central network data analytics function and the failure list received from the central monitoring engine, and to provide said at least one rule to the central rule applier network function.

Hence, the failure inspection engine can inspect failure data very precisely and individually of connected subsystems in an efficient way.

The failure inspection engine can be implemented by a calculation device with a memory.

In a further development of the invention, it is foreseen that the at least one previous communication within the 5G network is captured within a predefined period immediately before the execution of step a) and/or b).

Hence, the one or more applied rules are very robust in time-point-of-view. In other words, the rules provide a transmission connection for the 5G devices in like real-time behavior fulfilling predefined latency criteria even below the 5G standard specification.

The problem of the invention is also solved by a device for the efficient determination of a network parameter of an energy supply network, which has smart meters, comprising a computing device with a memory, wherein the device is configured to carry out the method according to the invention.

The problem of the invention is also solved by a computer program, comprising instructions which, when executed by a computer, cause the computer to execute the method according to the invention.

The problem of the invention is also solved by an electronically readable data carrier with readable control information stored thereon, which at least includes the computer program according to the invention and is designed in such a way that, when the data carrier is used in a computing device, it performs the method according to the invention.

The problem of the invention is also solved by a data carrier signal which transmits the computer program according to the invention.

The invention is explained in more detail below with reference to an exemplary embodiment shown in the accompanying drawings. In the drawings shows:
- Fig. 1: a domain model of the method according to the invention,
- Fig. 2: a flow model of a failure inspection engine,
- Fig. 3: a domain model of a rule engine,
- Fig. 4: a flow model of a rule engine.

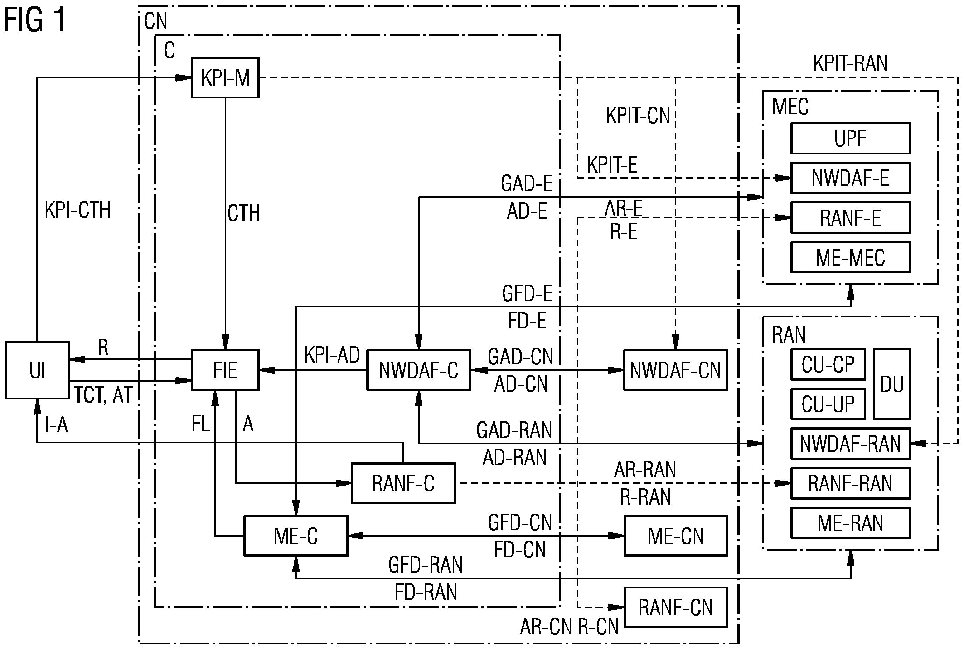

**Fig. 1** depicts a domain model of the latency-based network optimization and resource allocation method according to the invention based on failures at 5G core network CN, radio access network RAN and multi-access edge computing MEC.

A user interface UI allows an operator to interact with the system and to set a system configuration manually. Therefore, the user interface UI is configured to capture a context threshold CTH according to a predefined target context type TCT, for instance a dedicated subsystem CN, RAN or MEC, and a predefined action type AT, for instance an action A for automatic operation, or a recommendation R for manual operation.

The 5G core network CN comprises a central system C with a central network data analytics function NWDAF-C, a central rule applier network function RANF-C, a central monitoring engine ME-C, i.e. a monitoring orchestrator, and further a failure inspection engine FIE and a key performance indicator KPI manager KPI-M.

The Network Data Analytics Function NWDAF concept is already defined as a part of the 5G Core (5GC) architecture by the standards development body for mobile networks 3GPP.

The KPI manager KPI-M is configured to receive a KPI threshold value KPI-CTH captured by the user interface UI and to calculate a context threshold CTH and to provide the context threshold CTH to the failure inspection engine FIE.

Moreover, the KPI manager KPI-M is configured to calculate a key performance indicator type KPIT-CN for the core network CN ex. latency, a key performance indicator type KPIT-E for the edge MEC ex. latency, and a key performance indicator type KPIT-RAN for the radio-access-network RAN ex. latency and to distribute the respective indicators KPIT-CN, KPIT-E and KPIT-RAN to the dedicated subsystem CN, RAN or MEC.

The 5G core network CN comprises further a CN network data analytics function NWDAF-CN, a CN rule applier network function RANF-CN and a CN monitoring engine ME-CN.

The radio access network RAN comprises a RAN network data analytics function NWDAF-RAN, a RAN rule applier network function RANF-RAN and a RAN monitoring engine ME-RAN.

The radio access network RAN comprises further a central unit control plane CU-CP, a central unit user plane CU-UP, a distributed unit DU and a user plane function UPF as known elements in a 5G RAN.

The multi-access edge computing MEC comprises an edge network data analytics function NWDAF-E, an edge rule applier network function RANF-E and an MEC monitoring engine ME-MEC.

Said network data analytics function NWDAF-C, NWDAF-CN or NWDAF-RAN and NWDAF-E are configured to analyze data of the related network or subsystem according to the target context type TCT, for instance a dedicated subsystem CN, RAN or MEC.

Using instructions like "get analytics data" GAD-CN, GAD-RAN or GAD-E, the network data analytics function NWDAF-C is configured to request respective analytics data AD-CN, AD-RAN and/or AD-E from the respective network data analytics functions NWDAF-CN, NWDAF-RAN and/or NWDAF-E and to calculate a key performance indicator KPI-AD based on the received analytics data AD-CN, AD-RAN and/or AD-E.

Using instructions like "get failure data" GFD-CN, GFD-RAN or GFD-E, the monitoring engine ME-C is configured to request respective failure data FD-CN, FD-RAN and/or FD-E from the respective monitoring engine s ME-CN, ME-RAN and/or ME-E and to calculate a failure list FL based on the received failure data FD-CN, FD-RAN and/or FD-E and to provide the failure list FL to the failure inspection engine FIE.

The failure inspection engine FIE is configured to receive the key performance indicator KPI-AD and the failure list FL, and further, to receive the target context type TCT and the action type AT from the user interface UI.

The failure inspection engine FIE is configured to calculate an action A or a recommendation R based on the target context type TCT, the action type AT, the context threshold CTH, key performance indicator KPI-AD and the failure list FL as described in detail further below.

The failure inspection engine FIE is configured to provide the action A to the central rule applier network function RANF-C with a rule engine RE, which is configured to calculate one or more rules and to apply the one or more rules using instructions like "apply rule" AR-CN, AR-RAN or AR-E for instance to a dedicated subsystem CN, RAN or MEC.

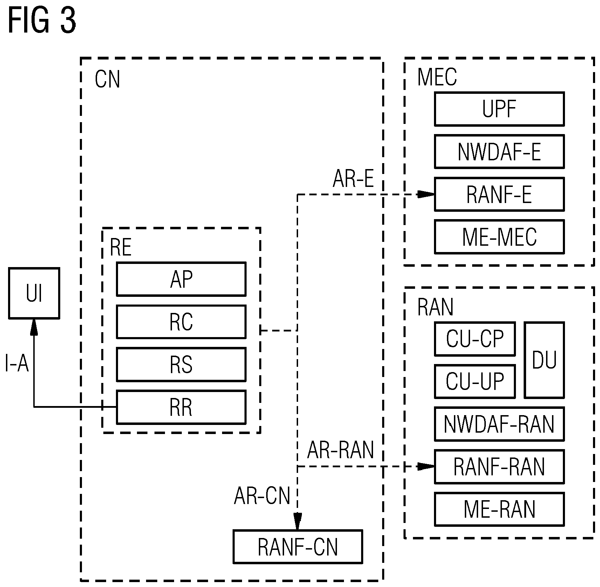

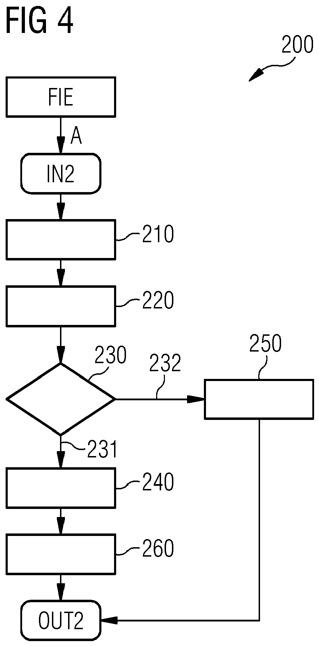

The rule engine RE is described further below in Figure 3 and Figure 4, describing the elements and the process to derive the one or more rules.

The failure inspection engine FIE is further configured to provide information I-A about the action A to the user interface UI.

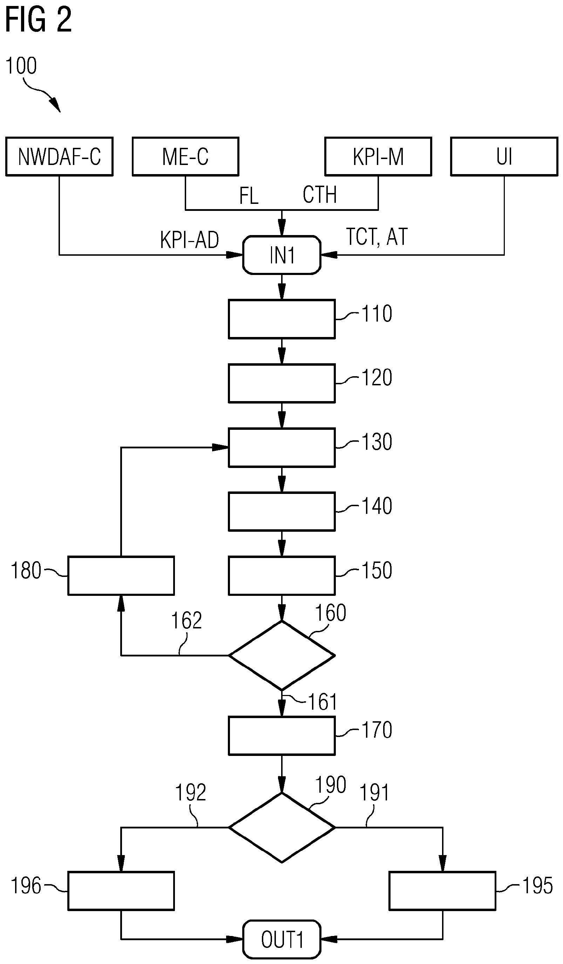

***Fig. 2*** shows a flow chart 100 of the process performed at the failure inspection engine FIE.

Basically, the failure inspection engine FIE uses the occurred failures to create failure data, together with data from the network data analytics function.

Analytics data KPI-AD are received at a process input IN1 from the central network data analytics function NWDAF-C.

Moreover, the central monitoring engine ME-C, acting as an orchestrator, provides the failure list FL to the process input IN1.

Further, the key performance indicator-manager KPI-M provides the context threshold CTH to the process input IN1.

Additionally, from the user interface UI target context type TCT regarding core-network CN, edge MEC and radio-access-network RAN and action type AT data are received at the process input IN1.

The latency-based failure list FL from the central monitoring engine ME-C is filtered in step 110 by applying the target context type TCT, i.e. core-network CN, edge MEC and radio-access-network RAN.

Subsequently, in step 120 the failure list FL is reordered by applying a predefined priority condition with aging, e.g. according to priorities regarding hardware or software modules or subsystems like core-network CN, edge MEC and radio-access-network RAN or software modules within, and considering the respective age of the list entities, i.e. time dependent failure items using time stamps.

Then, one or more iterations through the failure list FL are done by steps 130 to 160 one by one to map each failure on the failure list FL with the corresponding analytics data KPI-AD.

In step 130, a failure item is picked from the latency-based failure list FL, e.g. the top element of the sorted list.

In step 140, the analytics data KPI-AD are mapped to the failure item.

In step 150, the actual data from input IN are processed together with previously analyzed data KPI-AD from a queue and a context threshold CTH.

At the beginning of the flow 100, the queue is empty.

In step 160, it is checked if the processed data are sufficient enough to fit, which means that e.g. the context threshold CTH and the analyzed data KPI-AD meet the required latency criteria to fulfill the desired overall latency.

An inspection process starts with this data together with context thresholds and the previous results stored in a queue. If the inspection data can create a meaningful result from current amount of input, it forwards the result to recommendation process otherwise this processed result is added to the queue to be used by upcoming iterations.

It also gets target context, i.e. the 5G core network CN, the edge MEC and/or the radio-access-network RAN and the final action type AT from the user interface UI.

The target context TCT is used to filter the failure list just for the selected context.

The action type AT is used for the final forwarding of the output result, if recommendation is selected by the operator, then recommendation output is return to UI, otherwise necessary action to be taken is fed to the rule engine.

From the failure list FL, the context threshold CTH and/or the relevant target context types TCT, the relevant action type AT, i.e. the action A or the recommendation R, is derived.

The action A is performed at an automatic process without an operator interaction, and the recommendation R is reformed at a manual operation, where an operator interaction is involved.

If yes, i.e. step 161, failure analytics data are produced in step 170.

If no, i.e. step 162, analyzed data are added to the queue in step 180.

In step 190, it is checked if the action type AT is "recommendation"?

If yes, i.e. step 191, an action A is produced in step 195 as output OUT1.

The action A can be a definition of a corresponding rule for the transmission of communication through the 5G network which fulfills a predefined criterion regarding latency.

If no, i.e. step 192, the recommendation R is produced in step 196 as output OUT1.

The recommendation R can be a calculated latency which the 5G network can provide, to which a predefined criterion regarding latency should be changed.

***Fig. 3*** shows a domain model of the rule engine RE included in the central rule applier network function RANF-C of the 5G system.

The rule engine RE comprises following modules:
- an action processor AP, configured to determine and to initiate an action A to the relevant subsystem CN, RAN and/or MEC of the 5G system,
- a rule creator RC, configured to calculate a rule according to the desired KPIs including the relevant subsystem CN, RAN and/or MEC of the 5G system,
- a rule sender RS, configured to provide a rule to the respective CN-, MEC- and RAN-rule applier network functions RANF-CN, RANF-E and RANF-RAN of the 5G system,
- a result reporter RR, configured to provide information about the action I-A to an user or an operator via the user interface UI of the 5G system.

The rule engine RE is configured to apply created rules using the instructions AR-CN, AR-E and AR-RAN to respective rule engine network functions RANF-CN, RANF-E and RANF-RAN.

***Fig. 4*** depicts a flow chart 200 of the rule engine RE, which is executed by the domain entities of the model of Fig. 3.

The failure inspection engine FIE provides an action A an input IN2 to the flowchart 200.

In step 210, the action A is processed by the action processor AP.

In step 220, a rule for application for CN, MEC or RAN is created by the rule creator RC.

In step 230, it is checked whether a rule is created.

If yes, i.e. step 231, the rule is sent to the CN, MEC or RAN rule applier network function RANF in step 240 by the rule sender RS.

If no, i.e. step 232, the operator is informed about the action, i.e. the absence of a rule in step 250 as an output OUT2.

After the execution of step 240, the operator is informed about the recommendation, i.e. the presence of a rule in step 260 as an output OUT2.

### List of reference numerals:

- 100, 200: method flow chart
- 110: Latency filter
- 120: Reorder failure list
- 130: Get failure
- 140: Get mapped analytics data
- 150: Process
- 160: check if sufficient enough?
- 161, 191, 231: Yes
- 162, 192, 232: No
- 180: Add analyzed data to queue
- 170: produce failure analytics data
- 190: check action type
- 195: produce recommendation
- 196: produce action
- 210: process action
- 220: create rule
- 230: check if rule is created?
- 240: send rule
- 250, 260: inform operator about action
- A: Action
- AD-CN: CN analytics data
- AD-E: Edge analytics data
- AD-RAN: RAN analytics data
- AP: Action processor
- AR-CN: Apply CN rule
- AR-E: Apply Edge rule
- AR-RAN: Apply RAN rule
- AT: Action type
- C: Central system
- CN: 5G core network
- CTH: Context threshold
- CU-CP: Central unit control plane
- CU-UP: Central unit user plane
- DU: Distributed unit
- FD-CN: CN failure data
- FD-E: Edge failure data
- FD-RAN: RAN failure data
- FIE: Failure inspection engine
- FL: Failure list
- GAD-CN: Get CN analytics data
- GAD-E: Get Edge analytics data
- GAD-RAN: Get RAN analytics data
- GFD-CN: Get CN failure data
- GFD-E: Get Edge failure data
- GFD-RAN: Get RAN failure data
- I-A: Information about action
- IN1, IN2: Input
- KPI-AD: Key performance indicator analytics data
- KPI-CTH: Key performance indicator type, context threshold
- KPI-M: Key performance indicator manager
- KPIT-CN: Key performance indicator type for CN ex. latency
- KPIT-E: Key performance indicator type for Edge ex. latency
- KPIT-RAN: Key performance indicator type for RAN ex. latency
- ME-C: central monitoring engine, monitoring orchestrator
- MEC: Multi-access Edge computing
- ME-CN: CN monitoring engine
- ME-MEC: MEC monitoring engine
- ME-RAN: RAN monitoring engine
- NWDAF-C: Central network data analytics function
- NWDAF-CN: CN network data analytics function
- NWDAF-E: Edge network data analytics function
- NWDAF-RAN: RAN network data analytics function
- OUT1, OUT2: Output
- RAN: Radio access network
- RC: Rule creator
- RE: Rule engine
- RANF-C: Central rule applier network function
- RANF-CN: CN rule applier network function
- RANF-E: Edge rule applier network function
- RANF-RAN: RAN rule applier network function
- RR: Result reporter
- RS: Rule sender
- TCT: Target context type
- UI: User interface
- UPF: User plane function

## Claims

1. Computer implemented method for improving the latency of a communication within a 5G network with a core-network (CN), a multi-access-edge-computing block (MEC) and a radio-access-network (RAN), comprising following steps:
a) determining and storing analytics data (KPI-AD, AD-CN, AD-E, AD-RAN) of the 5G network related to the latency of at least one previous communication within the 5G network, wherein the transmission of said at least one previous communication was performed successfully,
b) determining and storing failure data (FL, FD-CN, FD-E, FD-RAN) of the 5G network related to the latency of the at least one previous communication within the 5G network, wherein the transmission of said at least one previous communication has failed at least one predefined latency criterion (KPI-AD, KPI-CN, KPI-E, KPI-RAN, CTH, TCT, AT, FL),
c) calculating at least one rule (R-CN, R-E, R-RAN) derived from said stored analytics data (KPI-AD, AD-CN, AD-E, AD-RAN) and said stored failure data (FL, FD-CN, FD-E, FD-RAN), which at least one rule (R-CN, R-E, R-RAN) defines a transmission path through 5G network for a successful communication according to said at least one predefined latency criterion (KPI-AD, KPI-CN, KPI-E, KPI-RAN, CTH, TCT, AT, FL),
d) providing said at least one rule (R-CN, R-E, R-RAN) to the core network (CN), the multi-access edge computing block (MEC) and/or the radio access network (RAN) respectively affected by the rule, and
e) applying said at least one rule (R-CN, R-E, R-RAN), when establishing a transmission of a new communication through the 5G network.

2. Method according to the preceding claim, wherein the 5G network further comprises a network data analytics function for executing step a) including:
• a core-network network data analytics function (NWDAF-CN) configured to determine analytics data (AD-CN) regarding latency data from the core network (CN),
• an edge network data analytics function (NWDAF-E) configured to determine analytics data (AD-E) regarding latency data from the edge (MEC),
• a radio-access-network network data analytics function (NWDAF-RAN) configured to determine analytics data (AD-RAN) regarding latency data from the radio-access-network (RAN), and
• a central network data analytics function (NWDAF-C) configured to generate key performance indicator analytics data (KPI-AD) including the analytics data (AD-CN) from the core-network network data analytics function (NWDAF-CN), the analytics data (AD-E) from the edge network data analytics function (NWDAF-E) and the analytics data (AD-RAN) from the radio-access-network network data analytics function (NWDAF-RAN).

3. Method according to one of the preceding claims, wherein the 5G network further comprises a monitoring orchestrator for executing step b) including:
• a core-network monitoring engine (ME-CN) configured to determine failure data (FD-CN) regarding latency data from the core network (CN),
• an edge monitoring engine (ME-MEC) configured to determine failure data (FD-E) regarding latency data from the edge (MEC), and
• a radio-access-network monitoring engine (ME-RAN) configured to determine failure data (FD-RAN) regarding latency data from the radio-access-network (RAN), and
• a central monitoring engine (ME-C) configured to generate a failure list (FL) from said failure data (FD-CN) from the core network (CN), said failure data (FD-E) from the edge (MEC) and said failure data (FD-RAN) from the radio-access-network (RAN).

4. Method according to one of the preceding claims, wherein the 5G network further comprises a rule engine for executing step d) including:
• a core-network rule applier network function (RANF-CN) configured to apply a network rule (R-CN) to the core network (CN),
• an edge rule applier network function (RANF-E) configured to apply an edge rule (R-E) to the edge (MEC),
• a radio-access-network rule applier network function (RANF-RAN) configured to apply a radio-access-network rule (R-RAN) to the radio-access-network (RAN), and
• a central rule applier network function (RANF-C) configured to apply the core-network rule (R-C) to the core-network rule applier network function (RANF-CN), the edge rule (R-E) to the edge rule applier network function (RANF-E) and the radio-access-network rule (R-RAN) to the radio-access-network rule applier network function (RANF-RAN).

5. Method according to the preceding claims 1 to 4, wherein the 5G network further comprises a failure inspection engine (FIE) for executing step c), which is configured to consider the key performance indicator analytics data (KPI-AD) received from the central network data analytics function (NWDAF-C) and the failure list (FL) received from the central monitoring engine (ME-C), and to provide said at least one rule (R-CN, R-E, R-RAN) to the central rule applier network function (RANF-C).

6. Method according to one of the preceding claims, wherein the at least one previous communication within the 5G network is captured within a predefined period immediately before the execution of step a) and/or b).

7. Device for the efficient determination of a network parameter of an energy supply network, which has smart meters, comprising a computing device with a memory, wherein the device is configured to carry out the method according to one of the preceding claims.

8. Computer program, comprising instructions which, when executed by a computer, cause the computer to execute the method according to one of claims 1 to 6.

9. Electronically readable data carrier with readable control information stored thereon, which at least includes the computer program according to the preceding claim and is designed in such a way that, when the data carrier is used in a computing device, it performs the method according to one of claims 1 to 6.

10. Data carrier signal which transmits the computer program according to claim 8.
